# EUROPEAN PATENT APPLICATION

(11) **EP 2 740 646 A2**
(43) Date of publication of application: **11.06.2014**
(21) Application number: 13003542.1
(22) Date of filing: 13.07.2013
(51) Int. Cl.: B62B 9/22

(54) **A swing system for stroller's/buggy's and pram's**

(30) Priority: 06.12.2012 EP 12195940
(71) Applicant: Chowdhury, Fateha Khanam, Ilford, Essex IG3 8SE (GB)
(72) Inventor: Chowdhury, Fateha Khanam, Ilford, Essex IG3 8SE (GB)

(57) **Abstract**

1. This invention relates to a new and innovative release system for stroller seats placed on either side's of the seat shown on drawing 1 figure 4 so to let the seat swing gently forward and back to provide an entertainment to the child on stroller journey's. The release frame which acts to pivot the swing system safely placed away from the child's arm's reach. There is a manually operated lever which is located on the handle to also act as the main response to release the swing system of the seat can be detached and the release frame can also be taken out as shown on drawing 2 figure 2.

## Description

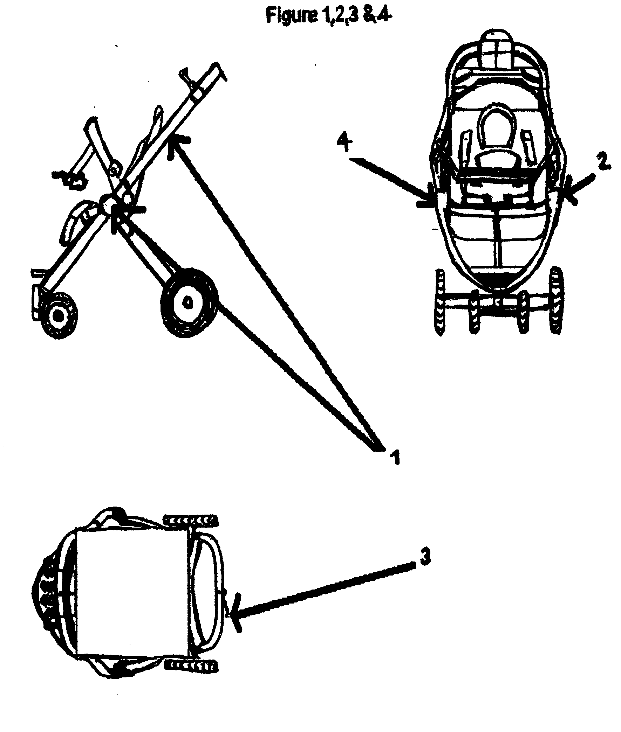

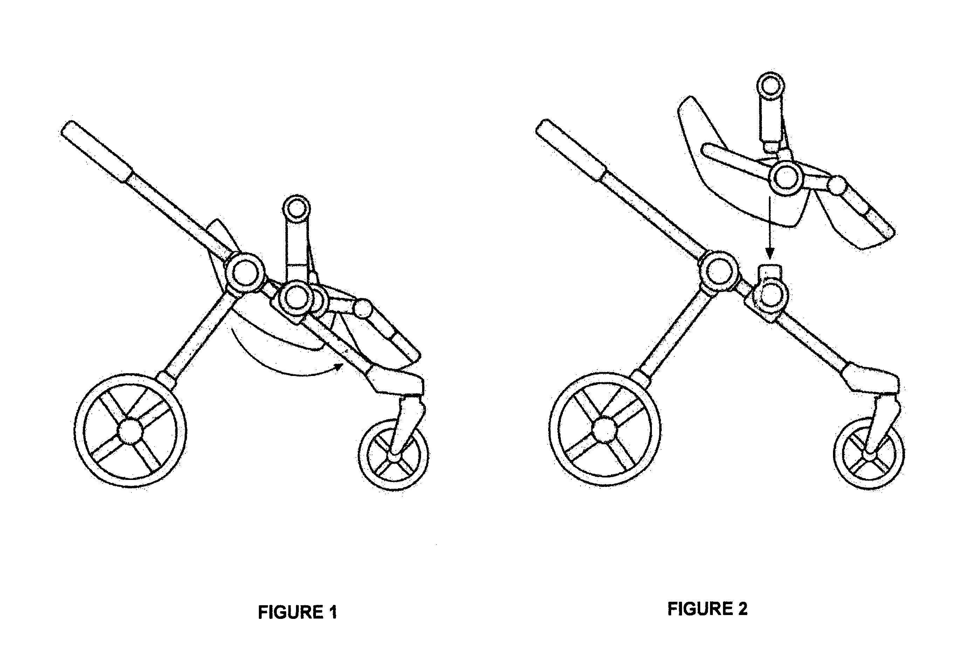

This invention relates to a swing system for stroller/buggy's/pram's. This swing system appears to be in the same principle as the one's which are found in amusement and adventure playground's/parks with the benefit of moving forward and back gently as oppose to a rocker which does not have the full capability of the swinging motion to travel to at least a 100 degrees forward and back giving the child entertainment. Nowadays strollers and buggy's lack an entertainment feature which could soothe the child on long day's out or when the parent takes the child out shopping, children often become impatient and toy's placed in front of the child does not entertain them in a way this swing system can, see drawing 2 figure 1.

This invention accordingly, comprises of a two way operation, one of which is manually operated via a lever situated on the handle of the stroller so it mechanically connects to the rotary mesh through steel cable run down through tubing, it relates more particularly to a release function as shown in drawing 1 figure 1. It pivots from a side bit which acts as a release frame also, a release frame and a dettachable swing seat which is shown drawing 1 figure 4.

The swing gently swing's forward and back up-to 100 degrees gently with respect to the release frame to sooth the child. Release frame can also be taken out, see drawing 1 figure 4. The release mechanism can also be switched off so as to leave the seat without it swinging. It has a safety method that it does not hinder the child's safety in any way as it is placed below the child's arms. At any time while the swing is in motion a release button may be used to stop the swing system using the release frame which pivots the swing system/seat.

The release frame drawing 1 figure 1 acts as the only operator or a two way operator with the option of it being controlled via the lever on the handle drawing 1 figure 3. The release frame can work by itself to operate the swing system or to swing the seat of the stroller, once it is turned on to swing it can swing by itself with the help of the movement of the stroller either by movement or via the lever or it being pushed by a way of force using the same principle of the swing in a playground. The seat may also have the option to have a handle to make the seat push forward and back.

Drawing 1 figure 4 relates to a manually operated lever to support the swing system, so it can leave the parent a more greater control on when to trigger the swing system by a steel tubing run down through the stroller frame on each side till it reaches the release mechanism shown on drawing 1 figure 1.

## Claims

1. A stroller swing system can be manually operated using a lever on the handle of the stroller which operates via a steel tubing run down through the frame till it reaches the release mechanism as shown in drawing 1 figure 1. The swing system is invented for the purpose of entertainment to the child.

2. A stroller swing system which can be manually operated using pivoted release frames which is triggered via the motion of the stroller when it is in its in use position, shown on drawing 1 figure 4. The release frame has a switch on button with the option to have the reclining control amalgamated. The swing defined in claim 1 can also be released via the lever placed on the handle of the stroller as shown on drawing 1.

3. A stroller swing system can be operated via the movement of the stroller by a way of force (when it is pushed at the handle at the journey) to release the functionality of the swing, via the release frame's/part's on either side of the seat drawing 1 figure 4.

4. A stroller swing system can be operated via a force of a push using the same principle as the playground swing so as to mimic the motion forward and back up-to 100 degrees, see drawing 2 figure 1.

5. A stroller swing system that can be detachable from its release functions/frames which works to pivot the swing forward and back, see drawing 2 figure 2.

6. A stroller swing system release frames that pivot on each side of the seat can also retro fit onto a wide range of stroller's/buggy's and pram's so seat can swing to mimic a playground swing manually with force or swing simultaneously whilst the stroller is in motion.
